# EUROPÄISCHE PATENTSCHRIFT

(11) **EP 1 662 195 B1**
(45) Veröffentlichungstag und Bekanntmachung des Hinweises auf die Patenterteilung: **05.03.2008**
(21) Anmeldenummer: 05023846.8
(22) Anmeldetag: 02.11.2005
(51) Int. Cl.: F16P 3/14, B30B 15/28, B21D 55/00

(54) **Sicherheitseinrichtung und Verfahren zum Bestimmen eines Nachlaufweges bei einer Maschine**
Safety device and method for determining the overrun of a machine
Dispositif de sécurité et procédé pour détérminer la course d'inertie d'une machine

(30) Priorität: 24.11.2004 DE 102004058472
(43) Veröffentlichungstag der Anmeldung: 31.05.2006
(73) Patentinhaber: Pilz GmbH & Co. KG, 73760 Ostfildern (DE)
(72) Erfinder: Krieg, Martin, 73230 Kirchheim/Teck (DE)
(74) Vertreter: Duhme, Torsten

(56) Entgegenhaltungen:
- DE-A1- 10 027 156
- DE-A1- 10 309 399
- DE-A1- 19 717 299
- DE-U1- 20 217 426

## Beschreibung

Die vorliegende Erfindung betrifft eine Sicherheitseinrichtung für eine Maschine, bei der ein erstes Maschinenteil eine Arbeitsbewegung gegen ein zweites Maschinenteil ausführt, wobei das erste Maschinenteil eine in Bewegungsrichtung vorlaufende Kante besitzt, mit zumindest einer ersten und einer zweiten optischen Schranke, die sich in der Arbeitsbewegung mit dem ersten Maschinenteil mit bewegen, wobei die erste optische Schranke der vorlaufenden Kante in einem ersten Abstand vorauseilt und wobei die zweite optische Schranke in einem zweiten Abstand zu der ersten optischen Schranke angeordnet ist, und mit einer Steuereinheit, die dazu ausgebildet ist, die Arbeitsbewegung des ersten Maschinenteils zu stoppen, wenn die erste optische Schranke unterbrochen wird.

Die Erfindung betrifft des Weiteren ein Verfahren zum Bestimmen eines Nachlaufweges bei einer Maschine, bei der ein erstes Maschinenteil eine Arbeitsbewegung gegen ein zweites Maschinenteil ausführt, wobei das erste Maschinenteil eine in Bewegungsrichtung vorlaufende Kante besitzt, mit den Schritten:
- Bereitstellen von zumindest einer ersten und einer zweiten optischen Schranke, die sich in der Arbeitsbewegung mit dem ersten Maschinenteil mit bewegen, wobei die erste optische Schranke der vorlaufenden Kante in einem definierten ersten Abstand vorauseilt und wobei die zweite optische Schranke in einem definierten zweiten Abstand zu der ersten optischen Schranke angeordnet ist, und
- Stoppen der Arbeitsbewegung des ersten Maschinenteils, wenn die erste optische Schranke unterbrochen wird.

Eine Sicherheitseinrichtung und ein Verfahren dieser Art sind aus DE 202 17 426 U1 bekannt.

Die Erfindung betrifft insbesondere eine Sicherheitseinrichtung für eine Biegepresse, Abkantpresse, Stanzmaschine oder Schneidemaschine, bei der zwei Maschinenteile aufeinander zu bewegt werden. Sie ist hierauf jedoch nicht beschränkt und kann gleichermaßen bei anderen Maschinen verwendet werden, bei denen eine mitlaufende, berührungslos wirkende Schutzeinrichtung (BWS) zur Vermeidung von Unfällen eingesetzt werden kann.

In der eingangs genannten DE 202 17 426 U1 ist eine Sicherheitsrichtung beschrieben, die insgesamt acht optische Schranken aufweist, die einem bewegten Maschinenteil bei dessen Arbeitsbewegung vorauseilen. Vier erste optische Schranken sind mit zunehmendem ersten Abstand in oder an der Bewegungsebene angeordnet, die die vorlaufende Kante durch die Arbeitsbewegung definiert. Vier zweite optische Schranken sind parallel zu der Bewegungsebene, jedoch zur Bedienerseite versetzt angeordnet. Darüber hinaus sind die zweiten optischen Schranken etwas höher angeordnet als die ersten optischen Schranken, so dass jeweils eine erste optische Schranke einer zweiten optischen Schranke in der Arbeitsbewegung vorauseilt. Ein besonderer Aspekt dieser bekannten Sicherheitseinrichtung liegt darin, dass ausgewählte erste (und zweite) optische Schranken mit Hilfe eines Konfigurationsmittels dauerhaft deaktivierbar sind. Damit ist es sehr einfach, die bekannte Sicherheitseinrichtung an Maschinen mit unterschiedlichen Bewegungsgeschwindigkeiten und vor allem mit unterschiedlichen Nachlaufwegen ("Bremswegen") anzupassen. Bei sehr langsamen Maschinen sind die Nachlaufwege in aller Regel kurz und die bekannte Sicherheitseinrichtung benötigt dann nur wenige optische Schranken, die in einem geringeren Abstand zu der vorlaufenden Kante des bewegten Maschinenteils angeordnet sind. Bei schnell laufenden Maschinen und auch bei Maschinen, die nur einfache Hydraulikantriebe besitzen, sind die dicht an der vorlaufenden Kante liegenden Schranken jedoch nicht in der Lage, das bewegte Maschinenteil rechtzeitig vor einem möglichen Unfall abzubremsen. In diesen Fällen werden daher auch die weiter voreilenden Schranken eingesetzt.

Letztlich hängt die geeignete Konfiguration der bekannten Sicherheitseinrichtung also vom Nachlaufweg der Maschine ab. Um die bekannte Sicherheitseinrichtung an einer Maschine richtig zu konfigurieren, ist es wünschenswert, den aktuellen Nachlaufweg bestimmen zu können. Darüber hinaus ist es aus Sicherheitsgründen wünschenswert, eine eingestellte Konfiguration im Hinblick auf den Nachlaufweg zu überprüfen. Die oben genannte DE 202 17 426 U1 offenbart hierzu ein Programmmodul, das in der Steuereinheit der Maschine hinterlegt ist und eine automatisierte Bestimmung des aktuellen Nachlaufweges ermöglicht. In der Praxis wird dazu üblicherweise die Funktionalität einer CNC-Steuereinheit genutzt, wobei man das bewegte Maschinenteil in einem Testmodus mit seiner Arbeitsgeschwindigkeit bewegt und dann über einen Not-Aus-Taster einen Notstopp auslöst. Der aktuelle Nachlaufweg kann dann von der CNC-Steuereinheit anhand der Positionen zum Zeitpunkt des Notstopps und nach dem Stillstand des Maschinenteils bestimmt werden.

Der Vorteil dieser Vorgehensweise liegt darin, dass der Nachlaufweg mit Hilfe der CNC-Steuereinheit sehr genau bestimmt werden kann, da eine CNC-Steuereinheit für exakte Positions- und Bewegungssteuerungen ausgelegt ist. Zudem besitzen viele Maschinen mit bewegten Maschinenteilen heutzutage CNC-Steuerungen.

Nachteil dieser Vorgehensweise ist allerdings, dass CNC-Steuereinheiten in aller Regel nicht sicher sind im Sinne der einschlägigen Sicherheitsbestimmungen, beispielsweise der europäischen Norm EN 954-1. Da die Bestimmung des Nachlaufweges für die bekannte Sicherheitseinrichtung eine sicherheitsrelevante Messgröße ist, müssen daher zusätzliche Maßnahmen getroffen werden. In aller Regel werden daher zusätzliche Positionsgeber, wie etwa Schaltnocken, benötigt, die allein der sicherheitsrelevanten Positionserfassung dienen.

Vor diesem Hintergrund ist es eine Aufgabe der vorliegenden Erfindung, eine Alternative anzugeben, die eine kostengünstige, komfortable und sichere Bestimmung des Nachlaufweges bei einer Maschine der oben genannten Art ermöglicht.

Diese Aufgabe wird gemäß einem Aspekt der Erfindung durch eine Sicherheitseinrichtung der eingangs genannten Art gelöst, die ferner eine Prüfeinheit besitzt zum Prüfen, ob die zweite optische Schranke nach dem Stopp des ersten Maschinenteils unterbrochen ist, sowie eine Sperreinheit zum Sperren der Arbeitsbewegung des ersten Maschinenteils in Abhängigkeit von einem Prüfergebnis der Prüfeinheit.

Die Aufgabe wird gemäß einem weiteren Aspekt der Erfindung durch ein Verfahren der eingangs genannten Art gelöst, bei dem nach einem Stillstand des ersten Maschinenteils geprüft wird, ob die zweite optische Schranke unterbrochen ist, und bei dem der zweite definierte Abstand als Schwellenwertmaß für den Nachlaufweg verwendet wird.

Die vorliegende Erfindung basiert damit auf der Idee, die optischen Schranken der Sicherheitseinrichtung selbst zur Bestimmung des Nachlaufweges zu verwenden. Da die Signalauswertung der Sicherheitseinrichtung per se nach den einschlägigen Sicherheitsbestimmungen ausgelegt ist, und da die Sicherheitseinrichtung ohnehin an der Maschine montiert werden muss, ist die neue Vorgehensweise sehr kostengünstig. Sie ermöglicht insbesondere, auf zusätzliche sicherheitsrelevante Positionsgeber zu verzichten, wenngleich solche Positionsgeber aus anderen Gründen natürlich trotzdem eingesetzt werden können.

Ein weiterer Vorteil ist die berührungslose und damit verschleißfreie Bestimmung des Nachlaufweges. Dies reduziert den Wartungsaufwand und damit die Betriebskosten der neuen Sicherheitseinrichtung.

Außerdem ermöglicht die neue Vorgehensweise eine sichere Bestimmung des Nachlaufweges unabhängig davon, ob die jeweilige Maschine eine CNC-Steuerung besitzt oder nicht. Die neue Vorgehensweise kann daher auch sehr vorteilhaft bei "kleinen" Maschinen eingesetzt werden, die ohne CNC-Steuerung betrieben werden, oder sie kann bei älteren Maschinen ohne CNC-Steuerung einfach nachgerüstet werden.

Schließlich ermöglicht die neue Vorgehensweise eine sehr sichere und trotzdem komfortable Bestimmung des Nachlaufweges, da Fehlbedienungen und/oder Manipulationen weitgehend ausgeschlossen sind. Dies gilt insbesondere dann, wenn die zumindest zwei optischen Schranken in einer starren, vom Hersteller fest vorgegebenen Position zueinander angeordnet sind, was sich auch zur Vereinfachung der Installation und Montage anbietet. Insbesondere ist es daher bevorzugt, dass alle Empfänger (bzw. alle Sender auf der Senderseite) der optischen Schranken in einem gemeinsamen Gehäuse oder auf einer gemeinsamen Montageplattform vormontiert sind, so dass bei der Installation der Sicherheitseinrichtung nur ein "Empfängerblock" (bzw. ein "Senderblock") montiert werden muss.

Die vorgeschlagene Vorgehensweise besitzt gegenüber der Bestimmung des Nachlaufweges mit Hilfe einer CNC-Steuereinheit den Nachteil, dass der Nachlaufweg nur in dem Raster des (zweiten) definierten Abstandes zwischen der ersten und zweiten optischen Schranke bestimmbar ist. Eine genaue Analyse der Situation hat jedoch gezeigt, dass dieser Nachteil für den vorliegenden Anwendungszweck ohne Weiteres akzeptabel ist, da hier eine Grenzwertbetrachtung genügt. Es kommt für die Absicherung der Maschine nicht darauf an, dass der Nachlaufweg exakt bestimmt ist. Vielmehr genügt es sicherzustellen, dass der tatsächliche Nachlaufweg unter keinen Umständen den für die Konfiguration der Sicherheitseinrichtung zu Grunde gelegten Wert übersteigt. Wenn diese Bedingung erfüllt ist, kann die neue Sicherheitseinrichtung zuverlässig arbeiten, selbst wenn der tatsächliche Nachlaufweg nicht exakt mit dem zweiten Abstand übereinstimmt.

Insgesamt ermöglichen die neue Sicherheitseinrichtung und das neue Verfahren somit eine kostengünstige, komfortable und sichere Bestimmung des Nachlaufweges. Die oben genannte Aufgabe ist daher vollständig gelöst.

In einer bevorzugten Ausgestaltung der Erfindung ist ein Stillstandsindikator vorgesehen, der einen Stillstand des ersten Maschinenteils nach einem Stopp der Arbeitsbewegung signalisiert, und zwar vorzugsweise automatisch. Bevorzugt ist dieser Stillstandsindikator mit der Prüfeinheit verbunden, so dass die Prüfeinheit die zweite optische Schranke tatsächlich erst nach dem endgültigen Stillstand des bewegten Maschinenteils überprüft.

In dieser Ausgestaltung lässt sich die Bestimmung des Nachlaufweges vollständig automatisieren. Alternativ hierzu könnte die Bestimmung de Nachlaufweges auch durch eine manuelle Eingabe initiiert werden, wenn nämlich der Bediener den vollständigen Stillstand des bewegten Maschinenteils erkannt hat. Über den höheren Komfort hinaus ist diese Ausgestaltung noch sicherer, da Fehleingaben und eine "zu frühe" Überprüfung der zweiten optischen Schranke verhindert sind.

In einer weiteren bevorzugten Ausgestaltung der Erfindung ist die zweite optische Schranke in Richtung der Arbeitsbewegung gesehen näher an der vorlaufenden Kante angeordnet als die erste optische Schranke.

Bei einer Maschine, bei der das bewegte Maschinenteil seine Arbeitsbewegung von einer oberen Ruheposition aus nach unten ausführt, wie beispielsweise bei einer Abkantpresse, hat diese Ausgestaltung zur Folge, dass die zweite optische Schranke oberhalb von der ersten optischen Schranke sitzt. Die Ausgestaltung ist jedoch nicht auf diese bevorzugte Anordnung beschränkt und umfasst gleichermaßen Anordnungen, bei denen das bewegte Maschinenteil von unten nach oben oder in einer beliebigen anderen Richtung eine Arbeitsbewegung ausführt. Des Weiteren sind auch Fälle eingeschlossen, bei denen zwei oder mehr Maschinenteile zeitgleich aufeinander zu bewegt werden. In jedem Fall besitzt diese Ausgestaltung den Vorteil, dass das zweite Maschinenteil als Bezugspunkt für die zweite optische Schranke verwendet werden kann. Mit anderen Worten kann die Position des ersten, bewegten Maschinenteils nach dem Stillstand (und damit der Nachlaufweg) bestimmt werden, indem man überprüft, ob die zweite optische Schranke durch das zweite Maschinenteil oder ein damit verbundenes Hindernis unterbrochen wird. Diese Ausgestaltung ermöglicht eine besonders einfache und zuverlässige Bestimmung des Nachlaufweges mit einer Sicherheitseinrichtung der eingangs beschriebenen Art, insbesondere an einer Presse oder dergleichen.

In einer weiteren bevorzugten Ausgestaltung ist die Sperreinheit so ausgebildet, dass sie die Arbeitsbewegung des ersten Maschinenteils sperrt, wenn die zweite optische Schranke nach dem Stillstand unterbrochen ist.

Diese Ausgestaltung vereinfacht die Bestimmung des Nachlaufweges noch weiter. Insbesondere lässt sich sehr einfach feststellen, ob der Nachlaufweg des bewegten Maschinenteils kleiner ist als der definierte zweite Abstand zwischen den beiden optischen Schranken. Alternativ hierzu ist es jedoch grundsätzlich auch möglich, ein Überschreiten des angenommenen Nachlaufweges festzustellen, wenn die zweite optische Schranke nach dem Stillstand des ersten Maschinenteils nicht unterbrochen ist, indem beispielsweise ein geeignetes Sensorfeld von der zweiten optischen Schranke beleuchtet wird und das Sensorfeld eine Aussage über die Position des bewegten ersten Maschinenteils nach dem Stillstand ermöglicht.

In einer weiteren bevorzugte Ausgestaltung ist die Steuereinheit ferner dazu ausgebildet, die Arbeitsbewegung des ersten Maschinenteils zu stoppen, wenn die zweite optische Schranke unterbrochen wird.

In dieser Ausgestaltung arbeitet die zweite optische Schranke ebenfalls als "echte Sicherheitsschranke", d.h. sie dient nicht nur der Positionsbestimmung des bewegten Maschinenteils nach dem Stillstand. Hierdurch lässt sich auf kostengünstige Weise eine zusätzliche Sicherheit erreichen, und zwar insbesondere dann, wenn die zweite optische Schranke näher an der vorlaufenden Kante angeordnet ist als die erste optische Schranke. In diesem Fall kann ein spätes Nachgreifen in den Gefahrenbereich sehr einfach und zuverlässig detektiert werden.

In einer weiteren bevorzugten Ausgestaltung sind eine Vielzahl von ersten optischen Schranken vorgesehen, die der vorlaufenden Kante mit zunehmenden ersten Abständen vorauseilen, wobei zumindest eine erste optische Schranke für die Dauer der Arbeitsbewegung deaktivierbar ist.

Diese Ausgestaltung kombiniert die vorliegende Erfindung in vorteilhafter Weise mit den Konfigurationsmöglichkeiten der aus DE 202 17 426 U1 bekannten Sicherheitseinrichtung. In ihrer allgemeinen Form ist die vorliegende Erfindung darauf jedoch nicht beschränkt. Die bevorzugte Ausgestaltung führt jedoch zu einer besonders variablen und kostengünstigen Sicherheitseinrichtung für Maschinen der eingangs genannten Art.

In einer weiteren bevorzugten Ausgestaltung ist eine Eingabeeinheit zum Eingeben eines Parameterwertes vorgesehen, der einen Nachlaufweg des ersten Maschinenteils repräsentiert, wobei die zumindest eine erste optische Schranke in Abhängigkeit von dem Parameterwert deaktivierbar ist.

Diese Ausgestaltung kombiniert den Grundgedanken der vorliegenden Erfindung mit einer Parametereingabe beim Konfigurieren der Sicherheitseinrichtung. Alternativ hierzu wäre es beispielsweise auch möglich, eine geeignete Konfiguration per "try-anderror" zu finden, indem für jede verfügbare Konfiguration getestet wird, ob sie ein sicheren Abschalten der Maschine unter Berücksichtigung des Nachlaufweges ermöglicht. Die bevorzugte Parametereingabe reduziert jedoch die Anzahl der erforderlichen Testläufe und ermöglicht damit eine schnellere und flexiblere Konfiguration.

In einer bevorzugten Ausgestaltung erfolgt die Eingabe des Parameterwertes in einen Speicher der eingangs genannten Steuereinheit. Besonders bevorzugt ist die Steuereinheit dabei eine fehlersichere SPS (Speicher programmierbare Steuerung), wie sie von der Anmelderin der vorliegenden Erfindung unter der Bezeichnung PSS® angeboten wird. Diese Ausgestaltung besitzt den Vorteil, dass mit Hilfe der Steuereinheit noch zahlreiche weitere Konfigurationsmöglichkeiten bereitgestellt werden können. Die neue Sicherheitseinrichtung ist daher besonders flexibel an eine bestimmte Maschine anzupassen. Insbesondere lassen sich in dieser Ausgestaltung die Zykluszeiten einer Maschine trotz der notwendigen Sicherheitsmaßnahmen minimieren.

In einer bevorzugten alternativen Ausgestaltung erfolgt die Parametereingabe mit Hilfe von DIP-Schaltern, Jumpern oder anderen manuell betätigten Stellelementen. Diese Ausgestaltung ermöglicht eine sehr einfache Parametrierung und ist besonders gut geeignet für Sicherheitseinrichtungen, die ohne sichere SPS betrieben werden. Besonders bevorzugt ist es im zuletzt genannten Fall, wenn das Stellelement bei jeder erneuten Spannungswiederkehr der Maschine eingelesen wird, was eine hohe Sicherheit gegenüber bewussten oder unbewussten Manipulationen bietet.

In einer weiteren bevorzugten Ausgestaltung, die auch für sich genommen eine erfinderische Weiterbildung der aus DE 202 17 426 U1 bekannten Sicherheitseinrichtung ist, ist eine dritte optische Schranke vorgesehen, die der ersten optischen Schranke in Richtung der Arbeitsbewegung gesehen in einem dritten Abstand vorauseilt, wobei die Steuereinheit dazu ausgebildet ist, die Bewegungsgeschwindigkeit des ersten Maschinenteils zu reduzieren, wenn die dritte optische Schranke unterbrochen wird, um das erste Maschinenteil mit einer reduzierten Bewegungsgeschwindigkeit zu bewegen.

Die dritte optische Schranke dieser Ausgestaltung dient also nicht als "Sicherheitsschranke", deren Unterbrechung zu einem Stopp der Arbeitsbewegung führt. Vielmehr wird die dritte optische Schranke hier als Sensorelement verwendet, um von einer Arbeitsbewegung mit hoher Geschwindigkeit (Eilgang) in eine Arbeitsbewegung mit geringerer Geschwindigkeit (Schleichgang) umzuschalten. Eine solche Umschaltung dient dazu, die Produktivität einer Maschine zu erhöhen, indem nur der letzte gefährliche Teil der Arbeitsbewegung mit einer sichereren langsamen Geschwindigkeit durchgeführt wird, während die Maschine mit einer höheren Geschwindigkeit in eine Arbeitsposition gebracht wird, aus der heraus beispielsweise ein Werkstück umgeformt wird. Bisher wurden für die Umschaltung zwischen Eil- und Schleichgang zusätzliche Positionsgeber verwendet, die in dieser Ausgestaltung ebenfalls entfallen können. Darüber hinaus ermöglicht eine dritte optische Schranke die Bestimmung von Prozessgrößen, wie beispielsweise der Dicke des zu bearbeitenden Werkstücks oder die Geschwindigkeit des bewegten Maschinenteils. Diese Prozessgrößen können vorteilhaft im Produktionsablauf berücksichtigt werden.

In einer weiteren Ausgestaltung ist eine Eingabeeinheit vorgesehen zum Eingeben einer Verzögerungszeit, um die Reduzierung der Bewegungsgeschwindigkeit nach Unterbrechen der dritten optischen Schranke zeitlich zu verzögern.

Diese Ausgestaltung ist besonders vorteilhaft, wenn eine Vielzahl erster optischer Schranken vorhanden ist, von denen zumindest einige im Rahmen eines Konfigurationsprozesses dauerhaft (d.h. zumindest für die Dauer der vollständigen Arbeitsbewegung) deaktivierbar sind. Die bevorzugte Ausgestaltung ermöglicht es dann, das Abbremsen des bewegten Maschinenteils nach dem Unterbrechen der dritten optischen Schranke zu verzögern, um das Maschinenteil so schnell wie möglich an das Werkstück heranzufahren. Damit kann unabhängig von der Konfigurationseinstellung der Sicherheitseinrichtung ein minimaler Arbeitszyklus erreicht werden.

In einer weiteren bevorzugten Ausgestaltung ist eine Eingabeeinheit zum Eingeben einer Werkstückdicke und/oder einer Bewegungsgeschwindigkeit des ersten Maschinenteils vorgesehen.

Wenn zumindest einer der beiden genannten Parameterwerte bekannt ist, kann mit Hilfe der dritten optischen Schranke der jeweils andere messtechnisch bestimmt oder überprüft werden. Beispielsweise kann die Dicke eines zu bearbeitenden Werkstücks bei bekannter Bewegungsgeschwindigkeit des bewegten Maschinenteils mit Hilfe der dritten optischen Schranke bestimmt werden. Umgekehrt kann bei bekannter Werkstückdicke die Geschwindigkeit des bewegten Maschinenteils bestimmt werden. Die bevorzugte Ausgestaltung stellt damit auf sehr kostengünstige Weise Prozessparameter zur Verfügung, mit deren Hilfe der Produktionsablauf optimiert werden kann. Darüber hinaus lässt sich die Betriebssicherheit in dieser Ausgestaltung weiter erhöhen, indem beispielsweise Werkstücke, deren Materialdicke einen festgelegten Schwellenwert übersteigt, erkannt und von einer Bearbeitung ausgeschlossen werden. Andererseits kann mit Hilfe eines normierten Prüfwerkstücks bekannter Dicke die Bewegungsgeschwindigkeit des ersten Maschinenteils sehr einfach und sicherheitsrelevant kontrolliert werden.

In einer weiteren bevorzugten Ausgestaltung liegt der dritte Abstand im Bereich von etwa 5 mm bis etwa 20 mm.

Dieser Größenbereich für den dritten Abstand hat sich zumindest für Anwendungen bei heutigen Pressen als besonders vorteilhaft erwiesen.

In einer weiteren bevorzugten Ausgestaltung beinhalten die optischen Schranken zumindest einen Empfangsteil und die Prüfeinheit und die Sperreinheit sind in den Empfangsteil integriert.

Diese Ausgestaltung ermöglicht es, die neue Sicherheitseinrichtung unabhängig von dem Vorhandensein einer sicheren SPS und/oder CNC-Steuerung einzusetzen. Daher können in dieser Ausgestaltung auch ältere und/oder kleine Maschinen, die nicht über die vorgenannten Steuerungen verfügen, sehr einfach und kostengünstig nachgerüstet werden.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer Presse mit der neuen Sicherheitseinrichtung,
- Fig. 2: eine schematische Darstellung eines Ausführungsbeispiels der optischen Schranken bei der Presse aus Fig. 1,
- Fig. 3: ein vereinfachtes Flussdiagramm zur Erläuterung des Verfahrens zum Bestimmen des Nachlaufweges gemäß einem Ausführungsbeispiel der Erfindung, und
- Fig. 4: ein vereinfachtes Flussdiagramm zur Erläuterung eines Arbeitszyklus der Presse aus Fig. 1 in einem bevorzugten Ausführungsbeispiel der Erfindung.

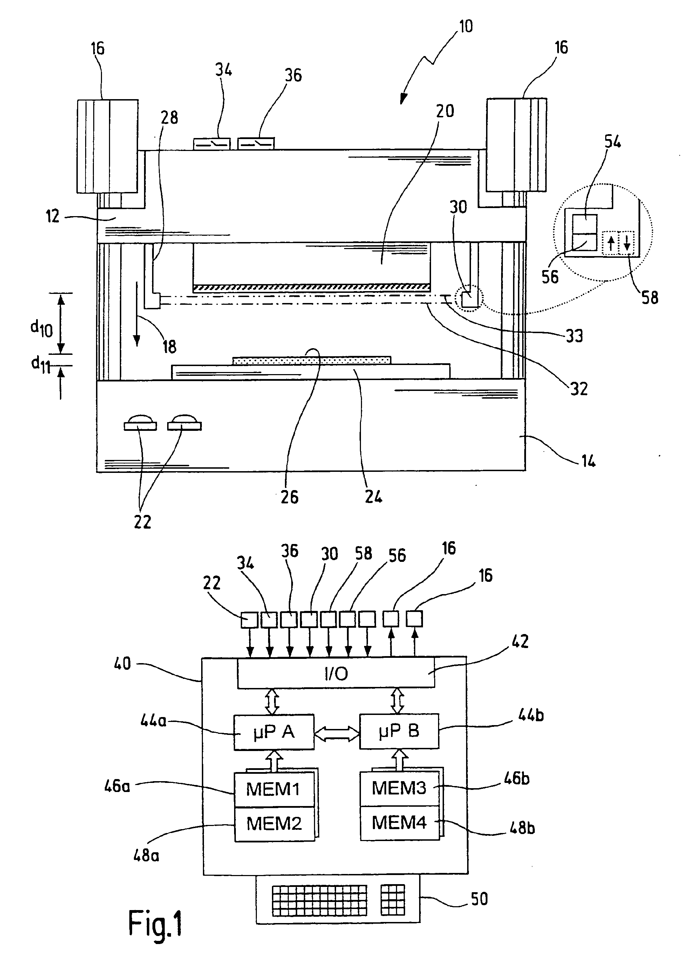

In Fig. 1 ist eine Presse als eine bevorzugte Maschine für die neue Sicherheitseinrichtung in ihrer Gesamtheit mit der Bezugsziffer 10 bezeichnet. Es sei jedoch nochmals darauf hingewiesen, dass die vorliegende Erfindung nicht nur bei Pressen, sondern auch bei anderen Maschinen eingesetzt werden kann, bei denen zwei Maschinenteile eine Arbeitsbewegung gegeneinander ausführen.

Die Presse 10 besitzt ein Oberwerkzeug 12 und ein Unterwerkzeug 14. Typischerweise ist das Oberwerkzeug 12 das bewegte, erste Maschinenteil im Sinne der vorliegenden Erfindung und das Unterwerkzeug 14 ist das zweite Maschinenteil. Bei den Bezugsziffern 16 sind zwei Antriebe vereinfacht dargestellt, mit denen das Oberwerkzeug 12 in Richtung eines Pfeils 18 gegen das Unterwerkzeug 14 verfahren werden kann. Am Oberwerkzeug 12 ist ein Biegewerkzeug 20 angeordnet. Bei der Bezugsziffer 22 ist ein Zwei-Hand-Schalter vereinfacht dargestellt, der mit beiden Händen betätigt werden muss, um einen Arbeitszyklus der Presse 10 zu starten und durchzuführen. Alternativ hierzu kann die Presse 10 auch über geeignete Fußschalter oder andere Betätigungselemente bedient werden.

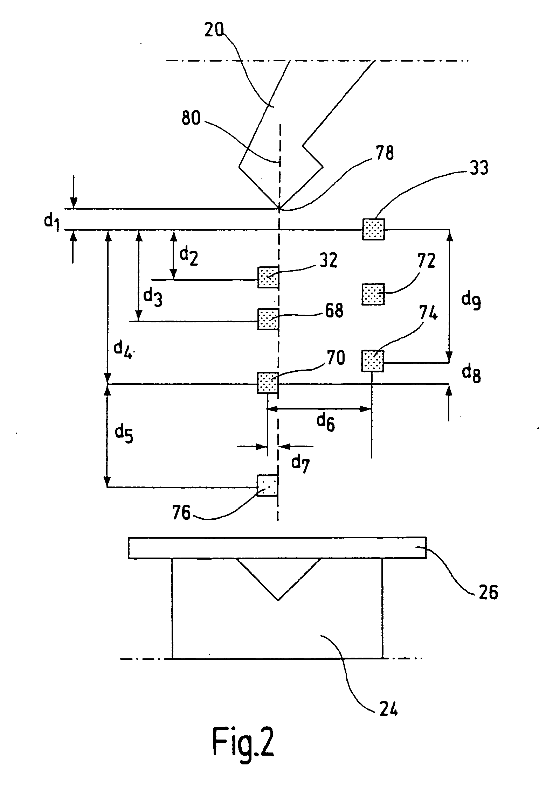

Auf dem Unterwerkzeug 14 ist eine Matrize 24 angeordnet, auf der ein Werkstück 26, beispielsweise ein Blechteil, liegt. Das untere Ende des Biegewerkzeugs 20 ist komplementär zu der Matrize 24 ausgebildet und ermöglicht eine spanlose Umformung des Werkstücks 26 beim Einfahren in die Matrize 24 (vgl. Fig. 2).

Mit den Bezugsziffern 28 und 30 sind zwei Halter bezeichnet, die links und rechts von dem Biegewerkzeug 20 an dem Oberwerkzeug 12 angeordnet sind. Am Ende des Halters 28 befindet sich ein Sender (hier nicht gesondert dargestellt) und am Ende des Halters 30 befindet sich mehrere Empfänger (nicht gesondert dargestellt). Sender und Empfänger bilden eine Lichtschrankenanordnung, die mehrere Lichtstrahlen 32, 33 erzeugt. Die Lichtstrahlen 32, 33 stellen eine erste und eine zweite optische Schranke im Sinne der vorliegenden Erfindung dar. Sie verlaufen in etwa parallel zu der unteren Kante des Biegewerkzeugs 20, wie nachfolgend anhand Fig. 2 noch näher erläutert ist. Alternativ zu der Verwendung von "herkömmlichen" Lichtschranken können die optischen Schranken 32, 33 auch mit Hilfe einer Kamera oder mit anderen elektromagnetischen Strahlen realisiert sein. Letztlich kommt es nur darauf an, dass der unteren vorlaufenden Kante des Biegewerkzeugs 20 zumindest eine nichtmaterielle Schranke vorausläuft, die als erste Schranke im Sinne der vorliegenden Erfindung wirkt.

Die optischen Schranken 32, 33 bewegen sich mit dem Biegewerkzeug 20 in Richtung des Pfeils 18 nach unten, wie dies an sich schon aus der eingangs genannten DE 202 17 426 U1 bekannt ist.

Bei den Bezugsziffern 34 und 36 sind zwei Endschalter schematisch dargestellt, die nur dann geschlossen sind, wenn sich das Oberwerkzeug 12 in seinem oberen Totpunkt befindet. Die geschlossene Stellung der Endschalter 34, 36 signalisiert damit, dass sich die Presse 10 in ihrem Ausgangszustand zur Durchführung eines Arbeitszyklus befindet.

Bei der Bezugsziffer 40 ist eine Steuereinheit vereinfacht dargestellt, die zumindest einige der Funktionen der Presse 10 steuert. Im bevorzugten Ausführungsbeispiel handelt es sich um eine fehlersichere SPS, wie sie von der vorliegenden Anmelderin unter der Bezeichnung PSS® angeboten wird. Die Steuereinheit 40 beinhaltet (vereinfacht dargestellt) einen Schnittstellenteil 42 sowie mehrere redundante Signalverarbeitungskanäle. Die Signalverarbeitungskanäle sind hier mit jeweils einem Prozessor 44a, 44b, einem ersten Speicher 46a, 46b und einem zweiten Speicher 48a, 48b dargestellt. Weitere Speicher sind symbolisch angedeutet. Die Prozessoren 44a, 44b können über eine geeignete Schnittstelle, z.B. eine Busverbindung oder ein Dual-ported-RAM miteinander kommunizieren und somit eine Plausibilitätsprüfung der jeweiligen Verarbeitungsergebnisse durchführen. Der Schnittstellenteil 42 besitzt eine Vielzahl von Ein- und Ausgängen, an denen die Sensoren und Aktoren der Presse 10 angeschlossen sind. Insbesondere sind hier der Zwei-Hand-Schalter 22, die Endschalter 34, 36 und zumindest der Empfänger 30 der Lichtschrankenanordnung angeschlossen. Des Weiteren können die Antriebe 16 der Presse über geeignete Aktoren, wie etwa Schütze (hier nicht dargestellt) ausgeschaltet werden.

Der Empfänger 30 beinhaltet in dem dargestellten Ausführungsbeispiel eine Prüfeinheit 54 und eine Sperreinheit 56, die hier nur schematisch dargestellt sind. In beiden Fällen handelt es sich um Funktionalitäten, die entweder als Programmmodul für einen hier nicht dargestellten Mikrocontroller des Empfängers 30 hinterlegt sind oder in Form einer festverdrahteten Logik, beispielsweise als ASIC, realisiert sind. Alternativ hierzu kann die Funktionalität der Prüfeinheit und der Sperreinheit auch in der Steuereinheit 40 implementiert sein, und zwar vorteilhafterweise als Programmmodul, das in den Speichern 46, 48 redundant abgespeichert ist. In einem weiteren Ausführungsbeispiel ist die Funktion der Steuereinheit teilweise oder sogar vollständig in dem Empfänger 30 integriert, und zwar ebenfalls als Programmmodul und/oder als festverdrahtete Logik. Die letzte Realisierung besitzt den Vorteil, dass die neue Sicherheitseinrichtung autark ist von anderen Steuereinheiten, die an der überwachten Maschine vorgesehen sein können.

Bei der Bezugsziffer 58 sind schematisch zwei Beschleunigungssensoren angedeutet, die in einem Ausführungsbeispiel der Sicherheitseinrichtung ebenfalls im Empfänger 30 integriert sind.

Alternativ oder ergänzend hierzu können ein oder mehrere Beschleunigungssensoren auch an einer anderen Stelle des bewegten Oberwerkzeugs 12 angeordnet sein. Mit Hilfe der Beschleunigungssensoren 58 lässt sich die jeweils aktuelle Bewegungsgeschwindigkeit und daraus abgeleitet die jeweils aktuelle Position des Oberwerkzeugs 12 während eines Arbeitszyklus bestimmen, wie dies in einer parallelen Patentanmeldung der vorliegenden Anmelderin beschrieben ist. Anstelle von Beschleunigungssensoren kann die Erfassung von Position und Geschwindigkeit des Oberwerkzeugs 12 jedoch auch in an sich bekannter Weise mit Hilfe von Glasmaßstäben, Encoderscheiben, einzelnen Positionssensoren u.a. erfolgen. Ein Beispiel für eine herkömmliche Geschwindigkeits- und Positionserfassung bei einer Presse 10 ist in WO 97/25568 (dort Fig. 9) beschrieben. Die Integration der Beschleunigungssensoren 58 in den Empfänger 30 und die Bestimmung der Bewegungsparameter des Oberwerkzeugs 12 mit Hilfe dieser Beschleunigungssensoren ermöglicht in Verbindung mit der vorliegenden Erfindung eine besonders einfache, kompakte und damit kostengünstige Sicherheitseinrichtung für eine Presse.

Im Hinblick auf die vorliegende Erfindung lassen sich die Beschleunigungssensoren 58 sehr vorteilhaft als Stillstandsindikator verwenden, der einen Stillstand des Oberwerkzeugs 12 signalisiert. Alternativ oder ergänzend hierzu kann als Stillstandsindikator jedoch auch ein Steuer- oder Zustandssignal der Antriebe 16 verwendet werden oder ein Signal, das aus einer herkömmlichen Positionsüberwachung abgeleitet ist, wie z.B. in WO 97/25568. Des weiteren ist es grundsätzlich auch möglich, die Bestimmung des Nachlaufweges nach einer entsprechenden Bedienereingabe manuell zu starten.

Bei der nachfolgenden Beschreibung eines bevorzugten Ausführungsbeispiels für die optischen Schranken der neuen Sicherheitseinrichtung bezeichnen gleiche Bezugszeichen dieselben Elemente wie zuvor. Gemäß Fig. 2 besitzt die bevorzugte Sicherheitseinrichtung insgesamt sieben optische Schranken, nämlich die beiden bereits in Fig. 1 gezeigten optischen Schranken 32, 33 sowie fünf weitere Schranken, die mit den Bezugsziffern 68, 70, 72, 74 und 76 bezeichnet sind. Die optischen Schranken verlaufen jeweils parallel zur vorderen, vorlaufenden Kante 78 des Biegewerkzeugs 20. Die optischen Schranken 32, 68 und 70 sind mit zunehmendem Abstand zu der vorderen Kante 78 unterhalb des Biegewerkzeugs 20 angeordnet. Die genannten Schranken spannen damit eine Überwachungsebene auf, die parallel zu der Bewegungsebene 80 liegt und gegenüber dieser geringfügig nach links (das ist im dargestellten Ausführungsbeispiel die von dem Bediener abgewandte, rückwärtige Seite der Presse 10) versetzt sind. Der Versatz beträgt in diesem Ausführungsbeispiel d₇ = 1 mm. Alternativ hierzu könnten die optischen Schranken 32, 68, 70, 76 jedoch auch exakt auf der Bewegungsebene 80 oder auf der Bedienerseite davon angeordnet sein.

Die optischen Schranken 33, 72 und 74 sind zur Bedienerseite versetzt von der Bewegungsebene 80 angeordnet. Sie bilden gewissermaßen ein Lichtgitter, das etwas höher angeordnet ist, als das Lichtgitter, das die optischen Schranken 32, 68 und 70 bilden. In einem bevorzugten Ausführungsbeispiel sind die Abstände der einzelnen optischen Schranken, die in Fig. 2 dargestellt sind, folgendermaßen gewählt: d₁ = 5 mm, d₂ = 9 mm, d₃ = 12 mm, d₄ = 17 mm, d₅ = 13 mm, d₆ = 20 mm, d₇ = 1 mm, d₈ = 2 mm und d₉ = 15 mm.

Die optische Schranke 76 dient in diesem Ausführungsbeispiel nicht als "Sicherheitsschranke", sondern als Sensorschranke (dritte optische Schranke im Sinne der vorliegenden Erfindung). Ein Unterbrechen der optischen Schranke 76 hat damit nicht das Anhalten des Oberwerkzeugs 12 zur Folge. Vielmehr wird lediglich die Bewegungsgeschwindigkeit des Oberwerkzeugs 12 beim Unterbrechen der optischen Schranke 76 von einer hohen Geschwindigkeit (Eilgang) auf eine niedrige Geschwindigkeit (Schleichgang) abgebremst. In Fig. 1 ist die Wegstrecke, die das Oberwerkzeug 12 im Eilgang zurücklegt, mit d₁₀ bezeichnet. Die verbleibende Strecke, die das Oberwerkzeug 12 im Schleichgang zurücklegt, ist mit d₁₁bezeichnet.

Im Gegensatz dazu arbeiten die verbleibenden sechs Schranken 32, 68, 70, 72, 74, 33 als Sicherheitsschranken, bei deren Unterbrechung die Arbeitsbewegung des Oberwerkzeugs 12 unmittelbar gestoppt wird. In der bevorzugten Ausführung sind die tiefer liegenden Schranken 68, 70, 72, 74 jedoch in Abhängigkeit vom Nachlaufweg der Presse 10 dauerhaft deaktivierbar. (Anmerkung: Es handelt sich hierbei nicht um eine kurzzeitige Deaktivierung der Schranken für denjenigen Teil der Arbeitsbewegung, den das Oberwerkzeug 12 im Schleichgang zurücklegt. Eine solche als Muting bezeichnete, kurzzeitige Deaktivierung ist unabhängig von der hiesigen Konfiguration erforderlich, damit das Oberwerkzeug 12 seine Arbeitsbewegung vollenden kann, selbst wenn die optischen Schranken durch das Werkstück 26 unterbrochen werden.) Deaktivierbar bedeutet dabei in diesem Zusammenhang, dass die Sicherheitsfunktion der Schranken 32, 68, 70, 72, 74, 33 ausgesetzt wird. Es ist jedoch von Vorteil, die Schranken 32, 68, 70, 72, 74, 33 auch im "deaktivierten" Zustand zu verwenden, nämlich als Sensorschranken. Beispielsweise kann anhand des bekannten Abstandes der "deaktivierten" Schranken die Geschwindigkeit des Oberwerkzeugs einfach bestimmt und/oder überprüft werden. Eine derartig bestimmte Bewegungsgeschwindigkeit des bewegten Maschinenteils (hier des Oberwerkzeugs) kann dann beispielsweise dazu verwendet werden, die Plausibilität des Signals der eigentlichen Sensorschranke 76 zu überprüfen. Damit lässt sich überwachen, ob die Umschaltung vom Eilgang in den Schleichgang tatsächlich durch das Werkstück oder eventuell durch ein anderes Hindernis, wie etwa die Hand eines Bedieners ausgelöst wurde.

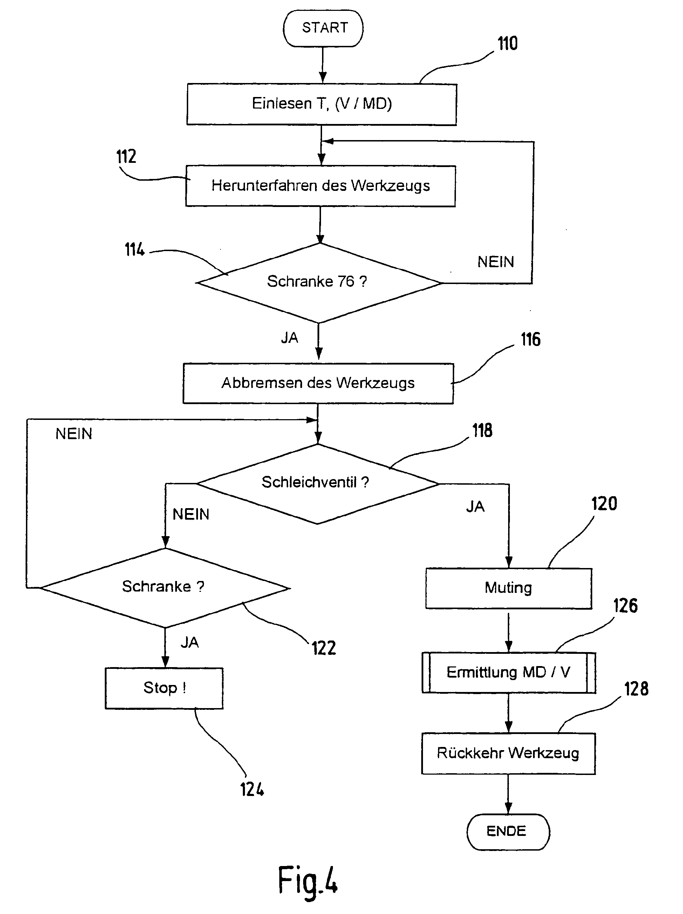

Andererseits kann auch die Sensorschranke 76 ergänzend eine Sicherheitsfunktion ausüben, indem beispielsweise die Dicke des zu bearbeitenden Werkstücks mit Hilfe der Sensorschranke 76 bestimmt wird (siehe Fig. 4, Bezugsziffer 126). Wenn hier ein zu großer oder zu kleiner Wert festgestellt wird, kann eine Sicherheitsabschaltung ausgelöst werden.

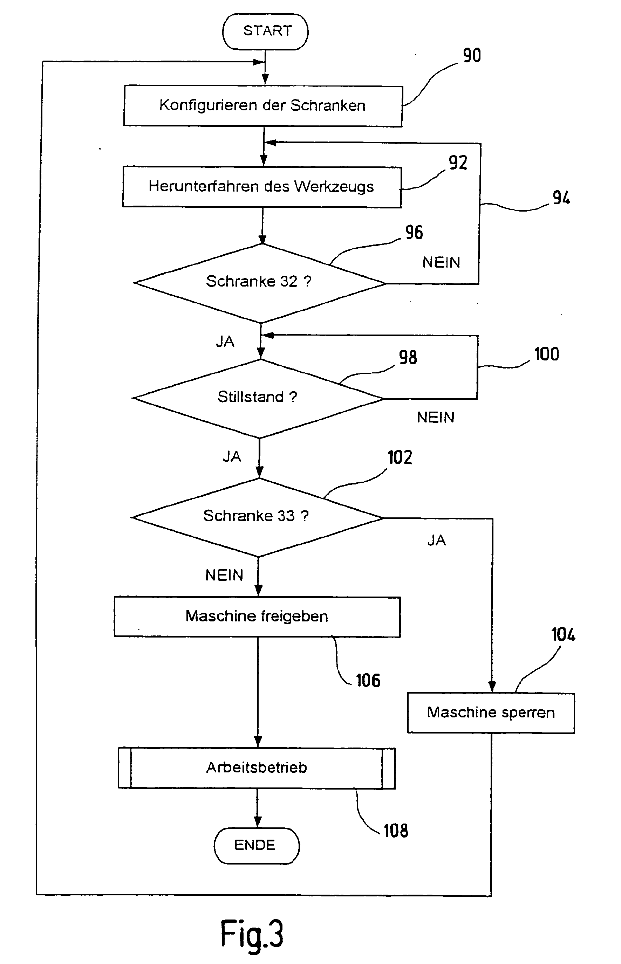

Ein bevorzugtes Ausführungsbeispiel, wie mit Hilfe der Sicherheitseinrichtung aus Fig. 2 der Nachlaufweg der Presse 10 bestimmt werden kann, ist in Fig. 3 dargestellt. Das Verfahren beginnt in Schritt 90 damit, dass die optischen Schranken 32, 33, 68, 70, 72, 74 konfiguriert werden, indem ein angenommener Nachlaufweg mit Hilfe der Eingabeeinheit 50 in die Steuereinheit 40 der Presse 10 eingelesen wird. Wenn man beispielsweise von einem angenommenen Nachlaufweg von 7,5 mm ausgeht, genügen bei den in Fig. 2 dargestellten Abständen die optischen Schranken 32 und 33 zum Absichern der Presse 10. Dieser Betriebsmodus ist beispielhaft auch in Fig. 1 dargestellt. Um zu gewährleisten, dass die Presse 10 auch mit nur diesen beiden optischen Schranken hinreichend abgesichert ist, wird anschließend der Nachlaufweg bestimmt. Hierzu wird das Oberwerkzeug 12 in einem Konfigurationsmodus heruntergefahren (Schritt 92), und zwar bevorzugt im Eilgang Vorzugsweise ist in diesem Konfigurationsmodus die Schranke 76 deaktiviert, damit das Oberwerkzeug im Eilgang in den Notstopp gefahren wird. Das Herunterfahren erfolgt solange, bis die optische Schranke 32 von einem Hindernis, beispielsweise einem Prüfwerkstück, unterbrochen wird (Schleife 94, Schritt 96). Sobald die Schranke 32 unterbrochen ist, wird das Oberwerkzeug 12 angehalten. Aufgrund von Reaktionszeiten und Trägheitskräften erfolgt der Stillstand jedoch nicht unmittelbar, sondern mit einer gewissen Verzögerung. Erst nach dieser Verzögerung kommt das Oberwerkzeug 12 zum Stillstand, was gemäß Schritt 98 bzw. Schleife 100 überprüft wird. Sobald ein vollständiger Stillstand detektiert ist, wird gemäß Schritt 102 überprüft, ob die zweite optische Schranke 33 durch das Prüfwerkstück oder das zweite Maschinenteil unterbrochen ist. Ist dies der Fall, wird die Maschine gemäß Schritt 104 gesperrt, da der eingegebene Nachlaufweg offensichtlich zu kurz war. Für eine hinreichende Absicherung der Presse müssen daher weitere optische Schranken, beispielsweise die Schranken 68 und 72 hinzugenommen werden, so dass ein Anhalten des Oberwerkzeugs 12 früher ausgelöst wird. Ist hingegen im Schritt 102 festgestellt worden, dass die optische Schranke 33 nicht unterbrochen ist, wird die Maschine gemäß Schritt 106 freigegeben. Es kann dann gemäß Schritt 108 der Arbeitsbetrieb aufgenommen werden.

Fig. 4 zeigt ein Ausführungsbeispiel für die Durchführung dieses Arbeitsbetriebes. Gemäß Schritt 110 wird hier zunächst eine Verzögerungszeit T und optional die vermutete Geschwindigkeit v des Oberwerkzeugs 12 und/oder die vermutete Materialdicke MD des Werkstücks 26 mit Hilfe der Eingabeeinheit 50 in die Steuereinheit 40 eingegeben. Nach dieser Parametrierung erfolgt gemäß Schritt 112 das Herunterfahren des Werkzeugs 12 solange, bis die optische Schranke 76 unterbrochen wird (Schritt 114). Sobald die optische Schranke 76 unterbrochen wird, wird das Oberwerkzeug 12 abgebremst (Schritt 116) und nur noch im Schleichgang weiter bewegt.

Die tatsächlich erfolgte Umschaltung vom Eilgang in den Schleichgang wird anhand des sogenannten Schleichventils (hier nicht dargestellt) überprüft (Schritt 118). Dieses Ventil spricht an, wenn das Oberwerkzeug mit verminderter Geschwindigkeit bewegt wird. Eine fehlende Aktivierung des Schleichventils deutet darauf hin, dass sich das Oberwerkzeug 12 weiterhin mit seiner Eilgeschwindigkeit bewegt.

Wurde die Aktivierung des Schleichventils erkannt, erfolgt gemäß Schritt 120 eine kurzzeitige Deaktivierung der Sicherheitsschranken ("Muting"). Wurde keine Aktivierung des Schleichventils erkannt, werden gemäß Schritt 122 die Sicherheitsschranken überwacht. Spricht eine der Schranken mangels Muting an, wird gemäß Schritt 124 ein Notstopp ausgelöst. Bei Muting in Schritt 120 erfolgt hingegen keine Unterbrechung der Arbeitsbewegung, d.h. das Oberwerkzeug 12 taucht in die Matrize 24 ein, wodurch das Werkstück 26 in der gewünschten Weise umgeformt wird.

Gemäß Schritt 126 kann mit Hilfe der Sensorschranke 76 und mit Hilfe der anfangs eingegebenen Parameterwerte MD und/oder v die Materialdicke MD des Werkstücks 26 bzw. die Bewegungsgeschwindigkeit v des Oberwerkzeugs 12 bestimmt oder überprüft werden. So lässt sich beispielsweise bei bekannter Bewegungsgeschwindigkeit des Oberwerkzeugs die Materialdicke des Werkstücks 26 aus der Zeit berechnen, während der die Sensorschranke 76 unterbrochen ist. Umgekehrt kann bei bekannter Materialdicke aus dieser Zeit die Geschwindigkeit des Oberwerkzeugs bestimmt werden. Es versteht sich, dass sowohl das Einlesen der genannten Parameterwerte als auch die Ermittlung gemäß Schritt 126 optional ist und auch entfallen kann.

Gemäß Schritt 128 kehrt das Oberwerkzeug 12 nach Erreichen seines unteren Totpunktes wieder in seine obere Ausgangslage zurück. Von hier aus kann der nächste Arbeitszyklus gestartet werden.

In einem bevorzugten Ausführungsbeispiel erfolgt das Umschalten vom Eilgang in den Schleichgang nach Durchbrechen der Messschranke 76 auch in Abhängigkeit von der im Schritt 110 eingegebenen Verzögerungszeit T. Ist T = 0 gewählt, schaltet die Presse 10 sofort beim Durchbrechen der Sensorschranke 76 in den Schleichgang. Bei einem Parameterwert T > 0 erfolgt das Umschalten erst mit einer entsprechenden zeitlichen Verzögerung. Hierdurch kann der tatsächliche Umschaltzeitpunkt variiert werden, wobei die Verzögerungszeit umso länger gewählt sein kann, je größer der Abstand der Sensorschranke 76 von der untersten aktiven Sicherheitsschranke 32, 68, 70 ist. Bei einer Presse mit einem großen Nachlaufweg, bei der vorzugsweise sämtliche Schranken aktiv sind, wird die Verzögerungszeit T = 0 gewählt. Wenn hingegen die Sicherheitsschranken 70, 74 deaktiviert sind, wird eine Verzögerungszeit T > 0 eingestellt. Wenn nur die Sicherheitsschranken 32, 33 aktiv sind, wird eine noch höhere Verzögerungszeit T eingestellt, um das Oberwerkzeug 12 solange wie möglich mit der hohen Eilganggeschwindigkeit zu betreiben.

Gemäß einem weiteren bevorzugten Ausführungsbeispiel der Erfindung kann die gestaffelte Anordnung der Sicherheitsschranken 32, 33, 68, 70, 72, 74 auch dazu verwendet werden, um die Bewegungsrichtung des Oberwerkzeugs zu überwachen und/oder festzustellen. Hierzu muss nur die Reihenfolge, in der die genannten Schranken von einem Hindernis unterbrochen werden, ausgewertet werden.

## Patentansprüche

1. Sicherheitseinrichtung für eine Maschine (10), bei der ein erstes Maschinenteil (12, 20) eine Arbeitsbewegung (18) gegen ein zweites Maschinenteil (14, 24) ausführt, wobei das erste Maschinenteil (12, 20) eine in Bewegungsrichtung vorlaufende Kante (78) besitzt,
- mit zumindest einer ersten (32, 68, 70) und einer zweiten (33) optischen Schranke, die sich in der Arbeitsbewegung (18) mit dem ersten Maschinenteil (12, 20) mitbewegen, wobei die erste optische Schranke (32, 68, 70) der vorlaufenden Kante in einem ersten Abstand (d₁, d₂, d₃, d₄) vorauseilt und wobei die zweite optische Schranke (33) in einem zweiten Abstand (d₈, d₉) zu der ersten optischen Schranke (32, 68, 70) angeordnet ist, und
- mit einer Steuereinheit (40), die dazu ausgebildet ist, die Arbeitsbewegung (18) des ersten Maschinenteils (12, 20) zu stoppen, wenn die erste optische Schranke (32, 68, 70) unterbrochen wird,
**gekennzeichnet durch** eine Prüfeinheit (54) zum Prüfen, ob die zweite optische Schranke (33) nach dem Stopp des ersten Maschinenteils (12, 20) unterbrochen ist, und **durch** eine Sperreinheit (56) zum Sperren der Arbeitsbewegung des ersten Maschinenteils (12, 20) in Abhängigkeit von einem Prüfergebnis der Prüfeinheit (54).

2. Sicherheitseinrichtung nach Anspruch 1, **gekennzeichnet durch** einen Stillstandsindikator (58), der einen Stillstand des ersten Maschinenteils (12, 20) nach einem Stopp der Arbeitsbewegung (18) signalisiert.

3. Sicherheitseinrichtung nach Anspruch 1 oder 2, **dadurch gekennzeichnet, dass** die zweite optische Schranke (33) in Richtung der Arbeitbewegung (18) gesehen näher an der vorlaufenden Kante (78) angeordnet ist als die erste optische Schranke (32, 68, 70).

4. Sicherheitseinrichtung nach einem der Ansprüche 1 bis 3, **dadurch gekennzeichnet, dass** die Sperreinheit (56) so ausgebildet ist, dass sie die Arbeitsbewegung (18) des ersten Maschinenteils (12, 20) sperrt, wenn die zweite optische Schranke (32) nach dem Stillstand unterbrochen ist.

5. Sicherheitseinrichtung nach einem der Ansprüche 1 bis 4, **dadurch gekennzeichnet, dass** die Steuereinheit (40) ferner dazu ausgebildet ist, die Arbeitsbewegung (18) des ersten Maschinenteils (12, 20) zu stoppen, wenn die zweite optische Schranke (33) unterbrochen wird.

6. Sicherheitseinrichtung nach einem der Ansprüche 1 bis 5, **gekennzeichnet durch** eine Vielzahl von ersten optischen Schranken (32, 68, 70), die der vorlaufenden Kante (78) mit zunehmenden ersten Abständen (d₁, d₂, d₃, d₄) vorauseilen, wobei zumindest eine erste optische Schranke (70, 68) für die Dauer der Arbeitsbewegung deaktivierbar ist.

7. Sicherheitseinrichtung nach Anspruch 6, **gekennzeichnet durch** eine Eingabeeinheit (50) zum Eingeben (90) eines Parameterwertes, der einen Nachlaufweg des ersten Maschinenteils (12, 20) repräsentiert, wobei die zumindest eine erste optische Schranke (70, 68) in Abhängigkeit von dem Parameterwert deaktivierbar ist.

8. Sicherheitseinrichtung nach einem der Ansprüche 1 bis 7, **gekennzeichnet durch** eine dritte optische Schranke (76), die der ersten optischen Schranke (32, 68, 70) in Richtung der Arbeitsbewegung (18) gesehen in einem dritten Abstand (d₅) vorauseilt, wobei die Steuereinheit (40) dazu ausgebildet ist, die Bewegungsgeschwindigkeit des ersten Maschinenteils (12, 20) zu reduzieren, wenn die dritte optische Schranke (76) unterbrochen wird, um das erste Maschinenteil (12, 20) mit einer reduzierten Bewegungsgeschwindigkeit zu bewegen.

9. Sicherheitseinrichtung nach Anspruch 8, **gekennzeichnet durch** eine Eingabeeinheit (50) zum Eingeben (110) einer Verzögerungszeit (T), um die Reduzierung der Bewegungsgeschwindigkeit nach Unterbrechen der dritten optischen Schranke (76) zeitlich zu verzögern.

10. Sicherheitseinrichtung nach Anspruch 8 oder 9, **gekennzeichnet durch** eine Eingabeeinheit (50) zum Eingeben einer Werkstückdicke (MD) und/oder einer Bewegungsgeschwindigkeit (v) des ersten Maschinenteils (12, 20).

11. Sicherheitseinrichtung nach einem der Ansprüche 8 bis 10, **dadurch gekennzeichnet, dass** der dritte Abstand (d₅) im Bereich von etwa 5 mm bis etwa 20 mm liegt.

12. Sicherheitseinrichtung nach einem der Ansprüche 1 bis 11, **dadurch gekennzeichnet, dass** die optischen Schranken (32, 33, 68, 70) zumindest einen Empfangsteil (30) beinhalten und dass die Prüfeinheit (54) und die Sperreinheit (56) in dem Empfangsteil integriert sind.

13. Verfahren zum Bestimmen eines Nachlaufweges bei einer Maschine (10), bei der ein erstes Maschinenteil (12, 20) eine Arbeitsbewegung (18) gegen ein zweites Maschinenteil (14, 24) ausführt, wobei das erste Maschinenteil (12, 20) eine in Bewegungsrichtung vorlaufende Kante (78) besitzt, mit den Schritten:
- Bereitstellen von zumindest einer ersten (32, 68, 70) und einer zweiten (33) optischen Schranke, die sich bei der Arbeitsbewegung (18) mit dem ersten Maschinenteil (12, 20) mitbewegen, wobei die erste optische Schranke (32, 68, 70) der vorlaufenden Kante (78) in einem definierten ersten Abstand (d₁, d₂, d₃, d₄) vorauseilt und wobei die zweite optische Schranke (33) in einem definierten zweiten Abstand (d₈, d₉) zu der ersten optischen Schranke (32, 68, 70) angeordnet ist, und
- Stoppen der Arbeitsbewegung (18) des ersten Maschinenteils (12, 20), wenn die erste optische Schranke (32, 68, 70) unterbrochen wird,
**dadurch gekennzeichnet, dass** nach einem Stillstand des ersten Maschinenteils (12, 20) geprüft wird, ob die zweite optische Schranke (33) unterbrochen ist, und dass der zweite definierte Abstand (d₈, d₉) als Schwellenwertmaß für den Nachlaufweg verwendet wird.

## Claims

1. A safety device for a machine (10), in which a first machine part (12, 20) carries out a working movement (18) towards a second machine part (14, 24), wherein the first machine part (12, 20) has a leading edge (78) in the direction of movement,
- comprising at least a first (32, 68, 70) and a second optical barrier (33), which move along with the first machine part (12, 20) during the working movement (18), wherein the first optical barrier (32, 68, 70) runs ahead of the leading edge by a first distance (d₁, d₂, d₃, d₄), and the second optical barrier (33) is arranged at a second distance (d₈, d₉) from the first optical barrier (32, 68, 70), and
- comprising a control unit (40), which is configured to stop the working movement (18) of the first machine part (12, 20) if the first optical barrier (32, 68, 70) is interrupted,
**characterized by** a test unit (54) for testing whether the second optical barrier (33) has been interrupted once the first machine part (12, 20) has been stopped, and by a blocking unit (56) for blocking the working movement of the first machine part (12, 20) as a function of a test result from the test unit (54).

2. The safety device of Claim 1, **characterized by** a standstill indicator (58) for indicating a standstill of the first machine part (12, 20) after the working movement (18) has been stopped.

3. The safety device of Claim 1 or 2, **characterized in that** the second optical barrier (33) is arranged closer to the leading edge (78) than the first optical barrier (32, 68, 70), when viewed in the direction of the working movement (18).

4. The safety device of any of Claims 1 to 3, **characterized in that** the blocking unit (56) is configured to block the working movement (18) of the first machine part (12, 20) if the second optical barrier (32) has been interrupted after the standstill.

5. The safety device of any of Claims 1 to 4, **characterized in that** the control unit (40) is further configured to stop the working movement (18) of the first machine part (12, 20) if the second optical barrier (33) is interrupted.

6. The safety device of any of Claims 1 to 5, **characterized by** a plurality of first optical barriers (32, 68, 70) running ahead of the leading edge (78) with increasing first distances (d₁, d₂, d₃, d₄), wherein at least one first optical barrier (70, 68) is capable of being deactivated for the duration of the working movement.

7. The safety device of Claim 6, **characterized by** an input unit (50) for entering (90) a parameter value, which represents an overtravel of the first machine part (12, 20), wherein the at least one first optical barrier (70, 68) is capable of being deactivated as a function of the parameter value.

8. The safety device of any of Claims 1 to 7, **characterized by** a third optical barrier (76), which runs ahead of the first optical barrier (32, 68, 70) by a third distance (d₅), when viewed in the direction of the working movement (18), the control unit (40) being configured to reduce the moving speed of the first machine part (12, 20) when the third optical barrier (76) is interrupted in order to move the first machine part (12, 20) at a reduced moving speed.

9. The safety device of Claim 8, **characterized by** an input unit (50) for entering (110) a delay time parameter (T) in order to delay the reduction of the moving speed after the third optical barrier (76) has been interrupted.

10. The safety device of Claim 8 or 9, **characterized by** an input unit (50) for entering a workpiece thickness parameter (MD) and/or a moving speed parameter (v) for the first machine part (12, 20).

11. The safety device of any of Claims 8 to 10, **characterized in that** the third distance (d₅) is in the range from approximately 5 mm to approximately 20 mm.

12. The safety device of any of Claims 1 to 11, **characterized in that** the optical barriers (32, 33, 68, 70) comprise at least one receiver part (30), and the test unit (54) and the blocking unit (56) are integrated in the receiver part.

13. A method for determining an overtravel in a machine (10), in which a first machine part (12, 20) carries out a working movement (18) towards a second machine part (14, 24), wherein the first machine part (12, 20) has a leading edge (78) in the direction of movement, comprising the steps of:
- providing at least a first (32, 68, 70) and a second optical barrier (33), which move along with the first machine part (12, 20) during the working movement (18), wherein the first optical barrier (32, 68, 70) runs ahead of the leading edge (78) by a defined first distance (d₁, d₂, d₃, d₄) and the second optical barrier (33) is arranged at a defined second distance (d₈, d₉) from the first optical barrier (32, 68, 70), and
- stopping the working movement (18) of the first machine part (12, 20) when the first optical barrier (32, 68, 70) is interrupted,
**characterized in that**, once the first machine part (12, 20) has come to a standstill, a test is carried out to establish whether the second optical barrier (33) has been interrupted, and **in that** the second defined distance (d₈, d₉) is used as a threshold value for the overtravel.

## Revendications

1. Dispositif de sécurité pour une machine (10), sur laquelle une première pièce de machine (12, 20) effectue un déplacement de travail (18) contre une deuxième pièce de machine (14, 24), la première pièce de machine (12, 20) disposant d'un bord en avant (78) dans le sens du mouvement,
- comportant au moins une première (32, 68, 70) et une deuxième (33) barrière optique, qui se déplacent dans le déplacement de travail (18) avec la première pièce de machine (12, 20), la première barrière optique (32, 68, 70) du bord en avant étant en avance de phase à une première distance (d₁, d₂, d₃, d₄) et la deuxième barrière optique (33) étant disposée à une deuxième distance (d₈, d₉) par rapport à la première barrière optique (32, 68, 70), et
- comportant une unité de commande (40), qui est configurée pour stopper le déplacement de travail (18) de la première pièce de machine (12, 20) lorsque la première barrière optique (32, 68, 70) est interrompue,
**caractérisé en ce qu'**une unité de contrôle (54) permette de contrôler si la deuxième barrière optique (33) est interrompue après l'arrêt de la première pièce de machine (12, 20) et par une unité de blocage (56) permettant de bloquer le déplacement de travail de la première pièce de machine (12, 20) en fonction d'un résultat de contrôle de l'unité de contrôle (54).

2. Dispositif de sécurité selon la revendication 1, **caractérisé par** un indicateur d'arrêt (58), qui signale un arrêt de la première pièce de machine (12, 20) après un arrêt du déplacement de travail (18).

3. Dispositif de sécurité selon la revendication 1 ou 2, **caractérisé en ce que** la deuxième barrière optique (33) vue dans le sens du déplacement de travail (18) est agencée plus près du bord en avant (78) que la première barrière optique (32, 68, 70).

4. Dispositif de sécurité selon l'une quelconque des revendications 1 à 3, **caractérisé en ce que** l'unité de blocage (56) est configurée de sorte qu'elle bloque le déplacement de travail (18) de la première pièce de machine (12, 20) lorsque la deuxième barrière optique (32) est interrompue après l'arrêt.

5. Dispositif de sécurité selon l'une quelconque des revendications 1 à 4, **caractérisé en ce que** l'unité de commande (40) est configurée en outre pour stopper le déplacement de travail (18) de la première pièce de machine (12, 20) lorsque la deuxième barrière (33) est interrompue.

6. Dispositif de sécurité selon l'une quelconque des revendications 1 à 5, **caractérisé par** une pluralité de premières barrières optiques (32, 68, 70), qui sont en avance de phase par rapport au bord en avant (78) avec des premières distances croissantes (d₁, d₂, d₃, d₄), au moins une première barrière optique (70, 68) étant désactivée pendant la durée du déplacement de travail.

7. Dispositif de sécurité selon la revendication 6, **caractérisé par** une unité de saisie (50) permettant de saisir (90) une valeur paramètre, qui représente une course d'inertie de la première pièce de machine (12, 20), l'au moins une première barrière optique (70, 68) étant désactivée en fonction de la valeur paramètre.

8. Dispositif de sécurité selon l'une quelconque des revendications 1 à 7, **caractérisé en ce qu'**une troisième barrière optique (76), qui est en avance de phase par rapport à la première barrière optique (32, 68, 70) vue dans le sens du déplacement de travail (18) à une troisième distance (d₅), l'unité de commande (40) étant configurée pour réduire la vitesse de mouvement de la première pièce de machine (12, 20), lorsque la troisième barrière optique (76) est interrompue, pour déplacer la première pièce de machine (12, 20) avec une vitesse de mouvement réduite.

9. Dispositif de sécurité selon la revendication 8, **caractérisé par** une unité de saisie (50) permettant de saisir (110) une temporisation (T) afin de retarder temporellement la réduction de la vitesse de mouvement après interruption de la troisième barrière optique (76).

10. Dispositif de sécurité selon la revendication 8 ou 9, **caractérisé en ce qu'**une unité de saisie (50) permette de saisir une épaisseur de pièce (MD) et/ou une vitesse de mouvement (V) de la première pièce de machine (12, 20).

11. Dispositif de sécurité selon l'une quelconque des revendications 8 à 10, **caractérisé en ce que** la troisième distance (d₅) est comprise entre environ 5 mm et environ 20 mm.

12. Dispositif de sécurité selon l'une quelconque des revendications 1 à 11, **caractérisé en ce que** les barrières optiques (32, 33, 68, 70) contiennent au moins une pièce de réception (30) et que l'unité de contrôle (54) et l'unité de blocage (56) sont intégrées dans la pièce de réception.

13. Procédé de détermination d'une course d'inertie sur une machine (10), sur laquelle une première pièce de machine (12, 20) effectue un déplacement de travail (18) contre une deuxième pièce de machine (14, 24), la première pièce de machine (12, 20) disposant d'un bord en avant (78) dans la direction de mouvement, comprenant les étapes de :
- mise à disposition d'au moins une première (32, 68, 70) et d'une deuxième (33) barrière optique, qui se déplacent lors du déplacement de travail (18) avec la première pièce de machine (12, 20), la première barrière optique (32, 68, 70) du bord en avant (78) étant en avance de phase à une première distance définie (d₁, d₂, d₃, d₄) et la deuxième barrière optique (33) étant disposée à une deuxième distance définie (d₈, d₉) par rapport à la première barrière optique (32, 68, 70), et
- d'arrêt du déplacement de travail (18) de la première pièce de machine (12, 20), lorsque la première barrière (32, 68, 70) est interrompue,
**caractérisé en ce qu'**après un arrêt de la première pièce de machine (12, 20), on vérifie si la deuxième barrière optique (33) est interrompue, et **en ce que** la deuxième distance définie (d₈, d₉) est utilisée comme valeur seuil pour la course d'inertie.
